# EUROPEAN PATENT SPECIFICATION

(11) **EP 1 694 035 B1**
(45) Date of publication and mention of the grant of the patent: **19.09.2012**
(21) Application number: 05447031.5
(22) Date of filing: 16.02.2005
(51) Int. Cl.: H04L 29/08, H04L 29/12, H04L 12/437, H04L 12/46

(54) **Network device and network for reliable packet routing**
Netzwerkvorrichtung und Netzwerk für zuverlässiges Routing
Appareil réseau et réseau pour routage fiable

(43) Date of publication of application: 23.08.2006
(73) Proprietor: Televic Rail NV, 8870 Izegem (BE)
(72) Inventor: Vermeulen, Frederik, 1090 Brussel (BE); Claeys, Luc, 8700 Tielt (BE); Lambrecht, Jürgen, 8490 Jabbeke (BE)
(74) Representative: Van Malderen, Joëlle

(56) References cited:
- US-A1- 2004 141 468
- DUTCHER W: "IP ADDRESSING PLAYING THE NUMBERS. IP ADDRESSES ARE IN SHORT SUPPLY- BUT THERE ARE WAYS TO EASE THE CRUNCH" DATA COMMUNICATIONS, MCGRAW HILL. NEW YORK, US, vol. 26, no. 4, 21 March 1997 (1997-03-21), pages 69-70,72,74, XP000659550 ISSN: 0363-6399
- THERNELIUS ET AL: "SIP Firewall Solution" INTERNET DRAFT, [Online] July 2000 (2000-07), pages 1-16, XP000863847 Internet Retrieved from the Internet: URL:http://www.softarmor.com/wgdb/docs/dra ft-thernelius-sip-firewall-solution-00.txt > [retrieved on 2005-11-25]
- MAY K P ET AL: "A FAST RESTORATION SYSTEM FOR ATM-RING-BASED LANS" IEEE COMMUNICATIONS MAGAZINE, IEEE SERVICE CENTER,NEW YORK, NY, US, vol. 33, no. 9, 1 September 1995 (1995-09-01), pages 90-98, XP000528014 ISSN: 0163-6804
- TSUCHIYA P F ET AL: "Extending the IP Internet through address reuse" COMPUTER COMMUNICATION REVIEW, ACM, NEW YORK, NY, US, vol. 1, no. 23, January 1993 (1993-01), pages 16-33, XP002075152 ISSN: 0146-4833
- SRISURESH P ET AL: "RFC 2694; DNS Extensions to Network Address Translators (DNS ALG)" NETWORK WORKING GROUP REQUEST FOR COMMENTS, September 1999 (1999-09), pages 1-29, XP002247781
- SRISURESH P ET AL: "RFC 2663 - IP Network Address Translator (NAT) Terminology and Considerations" IETF, August 1999 (1999-08), pages 1-30, XP002204216 INET
- LEE D C ET AL: "THE NEXT GENERATION OF THE INTERNET: ASPECTS OF THE INTERNET PROTOCOL VERSION 6" IEEE NETWORK, IEEE INC. NEW YORK, US, vol. 12, no. 1, January 1998 (1998-01), pages 28-33, XP000739805 ISSN: 0890-8044
- SENIE AMARANTH NETWORKS INC D: "Network Address Translator (NAT)-Friendly Application Design Guidelines" IETF STANDARD, INTERNET ENGINEERING TASK FORCE, IETF, CH, January 2002 (2002-01), pages 1-13, XP015009013 ISSN: 0000-0003
- HINDEN NOKIA S DEERING CISCO SYSTEMS R: "IP Version 6 Addressing Architecture" IETF STANDARD, INTERNET ENGINEERING TASK FORCE, IETF, CH, July 1998 (1998-07), pages 1-26, XP015008157 ISSN: 0000-0003

## Description

### Field of the invention

The present invention is related to the field of computer network devices for reliable packet routing in transportation vehicles.

### State of the art

Economics of scale make Ethernet (IEEE 802.3) and IP (internet protocol) technology (as defined by the Internet Society and the Internet Architecture Board, basic IP protocol being RFC 791) an interesting solution for all digital communication, wired and wireless, large and limited bandwidth, real-time traffic, reliable transmissions, etc...

An essential element of digital networking is the addressing, which follows a layered approach as in OSI (Open Systems Interconnection standard of the ISO) network layering.

At the data link layer Ethernet MAC (medium access control) addresses are used. They are used between machines on the same local area network. At the network layer IP addresses are used. They are known and used by the endpoints of the connection on an internet. Router nodes on the network connect local area networks to route IP datagrams to their destination, based on routing information.

While the original purpose was to have a unique IP address for each end node in the network, IP network address translation (RFC 1631) has been introduced to allow for networks with end nodes that have IP addresses that are not globally known or unique, to connect to a global internet by having their IP address in IP datagrams rewritten to a globally assigned unique IP address. This defines a hierarchy in IP addressing. The hierarchy is limited to two levels: global addresses and local addresses. No provisions are available for a further split up of the local addresses.

The IP network architecture is robust to configuration changes, based on auto-learning mechanisms with time-outs on learned information. For the local area network this is the ARP protocol (address resolution protocol RFC 826) and for the global network, the routing protocols (such as the OSPF protocol RFC 1247). The time scale to which these protocols react to configuration changes ranges from several minutes to several hours. During these times inconsistencies are possible. Shortening these times would either jeopardise the robustness of the network or involve a large messaging overhead.

The domain name system (DNS RFC 1034 and 1035) adds a logical addressing layer on top of the IP addresses. Apart from the convenience of textual addressing it adds flexibility, especially to add multiple overlay addressing hierarchies, possibly referring to the same IP addresses. The DNS addressing mechanism has been a preferred addressing layer to render configuration changes. Dynamic update in DNS (RFC 2136) allows for synchronous instead of periodic update of the addressing information in the DNS database. Here also the lower timeouts encompass an extra messaging overhead. More specifically, removing the possibility of cached DNS information adds extra delay to the connection set-up. A more severe limitation of this approach is that all client software has to obey this no-caching policy and that the configuration change only propagates to new connections. Again this could be coped with in the client applications, but this would require specific software to be added and would also involve extra messaging.

Shortening reconfiguration times is also an important issue when network link failures occur. The redundancy mechanism that is used is a crucial factor in the reconfiguration time. The standard solution to provide redundant connections in an Ethernet network is to apply the spanning tree protocol IEEE 802.1d, solving the general problem of deactivating redundant links in a general meshed network until a failure in the activated links necessitates the activation of a previously deactivated link.

The fault recovery time is in the order of seconds, even for the fast spanning tree protocol. Faster recovery is possible in simpler network architectures. A ring is the most simple redundant network architecture and technology for recovery under 1 second exists.

Patent document US5218600 discloses one such technique. It proposes to provide a redundant connective device for solving interruptions in a network system. The device is activated in case an interruption is detected and deactivated when no interruption is found.

[0010b] In the paper 'Ip addressing playing the numbers. IP addresses are in short supply - but there are ways to ease the crunch' (Data communications, vol.26, no.4, March 21, 1997) the author discusses the shortage of IP addresses. One way to translate private addresses into public addresses when they are sent to the Internet, is to use network address translation (NAT). Using NAT all private addresses of outbound traffic (towards the Internet) are taken and the source addresses are converted. For inbound traffic (towards the internal network) the process works in reverse.

Article "IP Addressing Playing the Numbers" by W. Dutcher, Data Communications, vol. 26, no. 4, 21 March 1997, p. 69 discloses an IP network wherein addresses from specially reserved blocks of addresses not registered on the Internet can be assigned. Routers or firewalls with network address translation capability then translate these into addresses that hosts on the Internet can recognize.

### Aims of the invention

The present invention aims to provide a network device that allows reliable packet routing in an hierarchical dynamic, reconfigurable network.

### Summary of the invention

The present invention relates to a network device according to claim 1, for reliable packet routing in an hierarchical network

In a preferred embodiment the packet routing in the network device is performed at the level of data link layer switching. Alternatively the packet routing is performed at the level of network layer routing or at any level of the network protocol layering.

In an advantageous embodiment in the network device an address composed of elements from the group {data link layer (MAC) address, network layer (IP) address, TCP or UDP port, DNS name, middleware name service identifier} is translated into an address from the group {data link layer (MAC) address, network layer (IP) address, TCP or UDP port, DNS name, middleware name service identifier).

In a specific embodiment the address translation is performed according to the TCN standard.

In another embodiment said sub-networks each have a ring structure. The network device is then preferably provided with a ring redundancy mechanism. Advantageously said ring redundancy mechanism is also used when sub-networks are added or removed. This can be done, for example, by considering the concatenation of rings as a ring in se or by considering the links between each two concatenated rings as part of a ring in se.

In a network comprising a plurality of network devices as described and an end node device at least two of said network devices are advantageously connected with one or more links to said end node device.

The present invention also provides a transportation vehicle comprising multiple cars and at least one invention network device, as set out in claim 11.

### Short description of the drawings

Fig. 1 represents the logical hierarchical structure of the transportation vehicles.

Fig. 2 represents the address translation concept at the lowest hierarchical level.

Fig. 3 represents the address translation concept in a configuration with two hierarchical levels.

Fig. 4 represents the ring structure of a network obtained by lining two sub-compositions with a ring structure.

Fig. 5 represents a structure wherein an additional logical ring is created to connect two ring structures.

Fig. 6 represents a structure wherein connections not belonging to an overall ring structure are used for inter-ring communication.

Fig. 7 represents an end node connected to several network devices.

Fig. 8 represents an end node comprising a standard end node to which an intermediate device is added.

### Detailed description of the invention

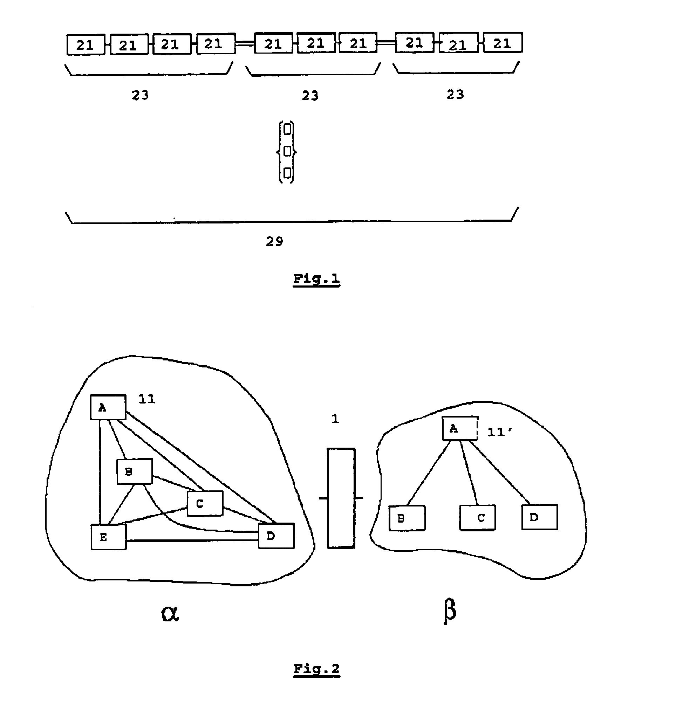

The present invention relates to communication between transportation vehicles. Each car of a vehicle comprises a computer network that is referred to as a sub-network. At the level of an individual car such a sub-network can have the complexity of a mesh network. Individual cars can be combined into so-called fixed and semi-fixed sub-compositions. In this way sub-networks get concatenated. As opposed to a fixed sub-composition, the number of cars in a semi-fixed sub-composition as well as the way the cars are arranged, is variable. Although it does not change very often, it yet varies now and then, hence the term `semi-fixed'. Several semi-fixed sub-compositions may be combined variably and interconnected to form larger compositions, which eventually make up the full vehicle composition. The full vehicle composition is arranged with a network composed of the sub-networks defined at lower level. In this way one obtains a logical hierarchical structure (see also Fig.1) with, in this example, at the lowest level the individual cars (21) , at the next level a unit of cars (23) (the sub-composition) and at the highest level the complete vehicle composition (29). Note that intermediate levels, e.g. between (23) and (29), can also be considered if required. Only at the lowest level a sub-network can have the complexity of a mesh network, at any other level a sub-network is formed by the concatenation of sub-networks at lower level. At the complete composition level one so obtains a hierarchical network. A possible application field of the present invention is in railway services. For example, the complete composition of a train may comprise a number of semi-fixed sub-compositions, that themselves each may comprise a plurality of cars each provided with a sub-network. However, it should be clear from the subsequent description that the present invention is not limited only to the field of railway services.

In the context of transportation vehicles that can be combined to fixed and semi-fixed compositions, the network dynamics have specific characteristics and are subject to very specific constraints regarding consistency and availability. By network dynamics is meant that network elements can be added to the network and other can be removed from it. In the present invention the considered network architecture is a single local area network (LAN) for the complete vehicle composition. The single LAN architecture also allows communicating at OSI layer 2 instead of at OSI layer 3. This avoids the (partially indeterministic) delay of IP routing and DNS resolving. It is also interesting in terms of broadcasting features.

The network architecture comprises a fixed configuration for data traffic inside a vehicle (a car) and network equipment coping with the network dynamics for inter-vehicle data traffic. The operation and configuration of the network device according to the present invention is hierarchically structured, e.g. for the semi-fixed sub-composition level and the complete composition level as described previously. With this approach it is possible to further divide local IP addresses.

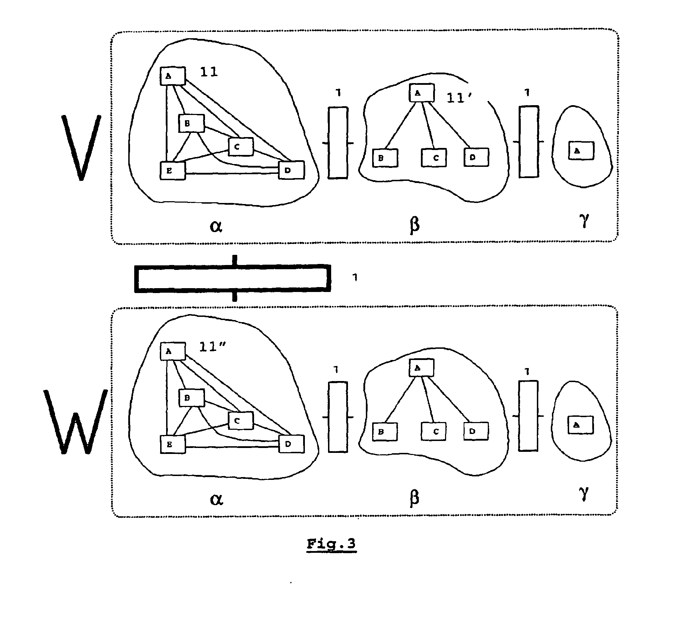

An operational example of the described techniques operates as follows. Consider two cars α and β forming a semi-fixed sub-composition (see Fig.2). A network device 11 in car α is configured to have address A. By means of address A network device 11 can be distinguished from other network devices within car α. Another instance of the same device 11' is present in car β. It is advantageous (from a production and maintenance viewpoint) to be able to also configure 11' with address A. If the two cars α and β containing devices 11 and 11', respectively, with address A are connected in a semi-fixed or fixed sub-composition, the address translating equipment comprised in network device (1) at car α is configured to translate device address A in car α to α-A in messages sent to another car. An address α-A allows to discriminate device 11 at the level of a sub-composition, i.e. in communication between cars of one sub-composition. In a similar way, the device 11 configured with address A in car α can send a message to the device 11' configured with address A in car β by sending a message to address β-A into which the address translating equipment has translated address A in car β. More in general, the address translating equipment in network device (1) is configured to translate any address X in car α (i.e. an address of the level of a car) to an address α-X (i.e. an address of the level of a sub-composition) in messages sent to another car. Similarly, the address translating equipment in network device (1) converts a destination address β-X in car β into X.
Neither device 11 or 11' with address A needs to know the identifier of the car it belongs to and thus no configuration change is required when the semi-fixed configuration is changed.
The same reasoning can be repeated for the other levels of the hierarchical structure. Semi-fixed sub-compositions can be given identifiers themselves, like V and W in Fig.3. Group V is composed of cars α, β, γ. Also group W is composed of cars with identifiers (addresses) α, β, γ. Both semi-fixed compositions can then contain a device (11 and 11" in Fig.3) configured with address A in a car configured as car α. The address translating equipment in a network device (1) at this level will translate their addresses to V-α-A and W-α-A, respectively. An address like W-α-A allows to discriminate network device 11 in messages exchanged between sub-compositions.

The address translation as described is centralised at boundaries of individual cars and (semi-fixed) vehicle sub-compositions, i.e. at the boundaries of an hierarchical level. For example, in Fig.2 a network device (1) provided with the address translating equipment can be positioned between car α and car β. In Fig. 3 a network device (1) is also present at the boundary between two sub-compositions. Advantageously a single network device (1) is provided in the full vehicle composition to take care of all address translations in messages exchanged at any level of the hierarchical structure.

In one embodiment the address translation comes down to a translation of specific parts of fixed IP addresses. Any other layer of addressing in the ISO network protocol stack can be translated instead, following the network architecture and addressing concepts as described. This can be parts of fixed MAC addresses, parts of TCP or UDP ports, parts of DNS names and parts of names in middleware naming service. Middleware is a software layer between the network and the applications, providing services such as identification, authentication, authorisation, directories and security.

In one implementation IP addresses are used which are divided in 4 parts:
1. a local part identifying devices in a car,
2. a part identifying the car in the semi-fixed sub-composition it belongs to,
3. a part identifying the semi-fixed sub-composition in the complete vehicle composition,
4. a globally unique identifier,
To address network devices inside the same car, parts 2 and 3 are kept zero. Inside the considered semi-fixed sub-composition, part 3 is kept zero.
The part 2 identifier only needs to be configured in the network equipment dealing with inter-vehicle data traffic, possibly at a single location per car. Alternatively two or more connection points per car can be provided. The part 3 identifier only needs to be configured in the network equipment dealing with data traffic from one semi-fixed sub-composition to another inside the total composition. This network equipment will translate IP addresses in the inter-vehicle datagrams. In contrast with the RFC 1631 equipment this equipment does not need to be at the boundary of a link layer switching domain.

Another implementation example involves addressing with addressing elements at multiple network protocol layers. An address, identified by the least significant byte of the 32-bit IP-address, IP1[25:32], combined with the least significant byte of the UDP port UDP_PORT1 [1:16] , is then for example translated into IP2[1:32] combined with UDP port UDP_PORT2[1:16], where IP2 is configured according to the dynamic network architecture and UDP_PORT2 [1:8] = IP1 [25:32] and UDP_PORT2 [9:16] = UDP_PORT1[9:16].

The network address translating equipment in each cars (or sub-composition of cars) is configured centrally to avoid inconsistencies. The unique identifiers to the cars can be assigned in several ways. A preferred solution in railway applications is to follow the train communication network (TCN IEC 61375) standard. The TCN standard address assignment can be implemented as a specific protocol on the network or its address assignment can be implemented using an existing IP protocol. More specifically the DHCP (dynamic host configuration protocol RFC 2131) can be used where the DHCP server is the TCN master (acting as a central address registry) assigning consecutive identifiers.

When 2 DHCP servers are present, the protocol needs to be supplemented with a mechanism to assign a master. Further a mechanism must be provided to ensure that identifiers are sent to the Network Address Translation (NAT) equipment of device (1) in the physical ordering in the network (e.g. by only relaying the protocol datagrams when they have been assigned an identifier themselves). Instead of performing the network address translation at layer 3 of the OSI model, it is here performed at layer 2. This provides the already mentioned advantages.

Another possible mechanism for reliable identifier assignment is to have the assignment physically configured in the address translation equipment, e.g. through hardware or software in or connected to the device.

An orthogonal mechanism to the end node addressing is the use of communication channels, i.e. multi-point circuits in the network. They can be used for reliability and availability enhancement, reason for which they are configured fixed in the network equipment. Standard technology for implementing communication channels are VLAN (IEEE 802.1Q) and middleware channels. In the presence of two orthogonal addressing mechanisms, one can be used as a fallback for the other, for example broadcast over a communication channel when end node addressing is not configured or not configured correctly. It is also possible to broadcast without any end node or communication channel addressing as fallback.

The logical hierarchical structure can also be used to provide improved resilience against a link failure in a network. It allows shortening the time to react to a change in the network configuration or a failure in a network link. The hierarchical structure allows a technique for fast recovery (less than 1 second) of faults in a network, which is not a simple ring, but a dynamic concatenation of sub-networks for inter-ring communication of separate rings. In other words, the sub-networks are rings that can be connected at multiple connecting nodes with a previous and/or next ring, respectively. For intra-ring communication a ring redundancy mechanism is used.

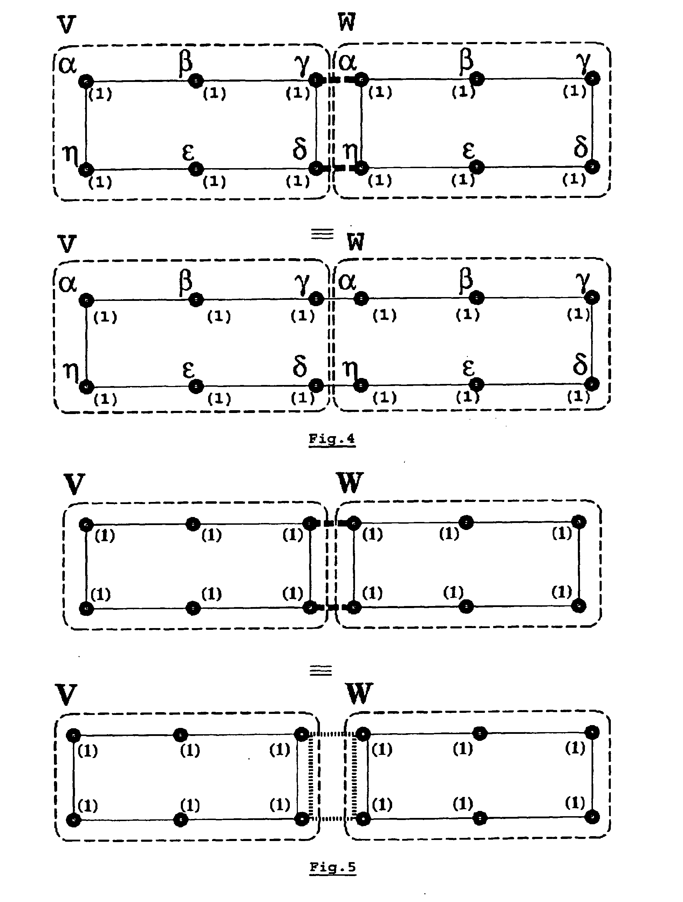

A first solution for the inter-ring communication is to consider the overall structure as a ring itself. This is illustrated in Fig. 4: the network devices (1) are arranged in a ring structure inside one sub-composition (V or W). The two rings are connected at nodes V-γ - W-a and V-δ - W-η. The individual rings' link connections that do not belong to the overall ring structure are not used for inter-ring communication. This allows communication between any two nodes with the simplicity of a ring structure (see bottom half of Fig. 4). In this configuration all physical links are always used, thus avoiding dormant failures.

A second solution is to use the redundancy mechanism in each individual ring and to consider the connection from one ring to the next ring as part of a ring on itself, where the same ring redundancy mechanism can be used (see Fig.5). This is advantageous in that the switch can use the same redundancy mechanism for intra-ring and inter-ring datagrams, avoiding complex behaviour and avoiding the implementation of several redundancy means. This solution also avoids dormant failures.

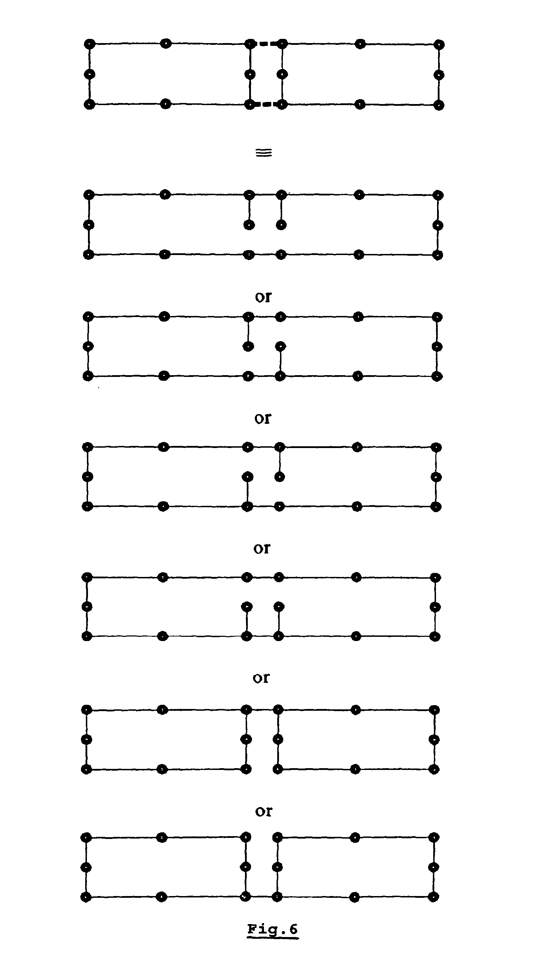

In an alternative solution the connections that do not belong to an overall ring structure are used for inter-ring communication in any configuration (see Fig.6).

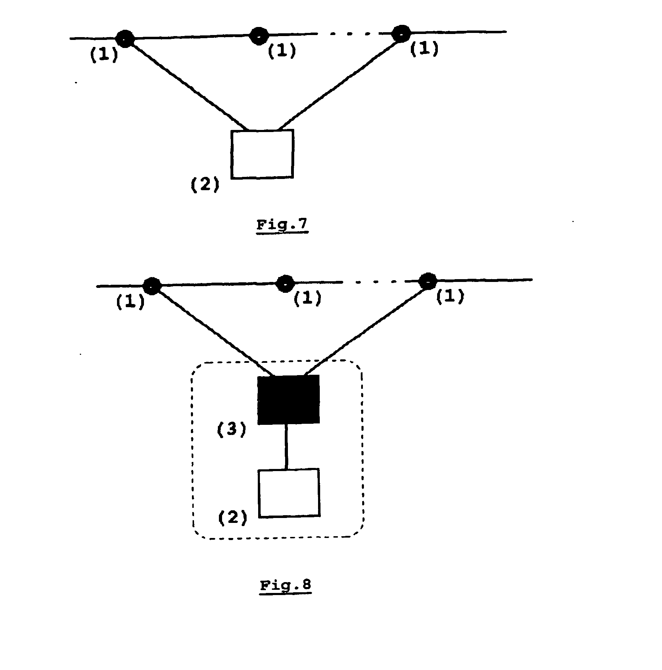

In order to cope also with a failure in the network device to which an end node is connected or the connection between network device and the end node, an end node (2) can be connected to multiple network devices (1) in the redundant network (see Fig.7). Only one connection is activated at a time and the decision is taken centrally. In a first solution this decision is taken in the network devices (1), where both network devices communicate e.g. via a watchdog to decide which one activates the connection to the end node. In the second solution the decision is taken in the end node.

In a different implementation an end node can be a standard network end node (2) with a single network connection to which an intermediate device (3) is added to handle the redundancy (Fig.8). This device acts as multiplexer of the single end node connection to the connections of the redundant network device (1).

## Claims

1. Network device (1) for reliable packet routing in a hierarchical network (29) where during operation sub-networks (23) are added and removed and wherein each sub-network is given an identifier, said network device comprising address translation equipment arranged to translate between addresses of at least two levels of said hierarchical network (29) by adding the identifier of the local sub-network for upward communication and by removing the identifier of the local sub-network for downward communication, wherein the address translation equipment in a sub-network is arranged to be located at the boundaries of the hierarchical level at which the sub-network is added or removed, such that the addition or removal of said sub-network (23) to or from the hierarchical network (29) is handled exclusively by a reconfiguration of said address translation equipment.

2. Network device as in claim 1, wherein said packet routing is performed at the level of data link layer switching.

3. Network device as in claim 1, wherein said packet routing is performed at the level of network layer routing.

4. Network device as in claim 1, wherein said packet routing is performed at any level of the network protocol layering.

5. Network device as in claim 1, wherein an address composed of elements from the group {data link layer,MAC, address, network layer,IP, address, TCP or UDP port, DNS name, middleware name service identifier} is translated into an address from the group {data link layer,MAC, address, network layer,IP, address, TCP or UDP port, DNS name, middleware name service identifier}.

6. Network device as in any of claims 1 to 5, wherein said address translation is performed according to the TCN standard.

7. Network device as in any of claims 1 to 6, wherein said sub-networks each have a ring structure connectable at multiple connecting nodes.

8. Network device as in claim 7, wherein said network device is further provided with a ring redundancy mechanism.

9. Network device as in claim 8, wherein said ring redundancy mechanism is used when sub-networks are added or removed.

10. Network comprising a plurality of network devices as in claim 9 and an end node device, said end node device being connected to at least two network devices.

11. Transportation vehicle comprising multiple cars and at least one network device according to any one claim 1 to 9, wherein the address translation equipment of the network device is arranged for translating addresses in packets sent between the cars of the vehicle.

12. Transportation vehicle of claim 11, wherein the vehicle is a railway vehicle.

## Patentansprüche

1. Netzwerkvorrichtung (1) für eine zuverlässige Leitweglenkung von Paketen in einem hierarchischen Netzwerk (29), wobei während des Betriebs Teilnetzwerke (23) hinzugefügt und entfernt werden, und wobei jedes Teilnetzwerk einen Identifizierer erhält, wobei die Netzwerkvorrichtung eine Einrichtung zur Adressenübersetzung umfasst, die angeordnet ist, um zwischen Adressen von mindestens zwei Stufen des hierarchischen Netzwerkes (29) zu übersetzen, indem sie den Identifizierer des lokalen Teilnetzwerkes für Aufwärtskommunikationen hinzufügt und indem sie den Identifizierer des lokalen Teilnetzwerkes für Abwärtskommunikationen entfernt, wobei die Einrichtung zur Adressenübersetzung in einem Teilnetzwerk angeordnet ist, um sich an den Grenzen der hierarchischen Netzwerkstufe zu befinden, auf der das Teilnetzwerk hinzugefügt oder entfernt wird, so dass das Hinzufügen oder Entfernen des Teilnetzwerks (23) zu bzw. aus dem hierarchischen Netzwerk (29) ausschließlich durch eine Neukonfiguration der Einrichtung zur Adressenübersetzung gehandhabt wird.

2. Netzwerkvorrichtung nach Anspruch 1, wobei die Leitweglenkung von Paketen auf der Stufe der Umschaltung der Datenverbindungsschicht erfolgt.

3. Netzwerkvorrichtung nach Anspruch 1, wobei die Leitweglenkung von Paketen auf der Stufe der Leitweglenkung der Netzwerkschicht erfolgt.

4. Netzwerkvorrichtung nach Anspruch 1, wobei die Leitweglenkung von Paketen auf einer beliebigen Stufe der Netzwerkprotokollschichtung erfolgt.

5. Netzwerkvorrichtung nach Anspruch 1, wobei eine Adresse, die aus Elementen der Gruppe {Datenverbindungsschicht, MAC, Adresse, Netzwerkschicht, IP, Adresse, TCP- oder UDP-Port, DNS-Name, Middleware-Benennungsdienstidentifizierer} besteht, in eine Adresse aus der Gruppe {Datenverbindungsschicht, MAC, Adresse, Netzwerkschicht, IP, Adresse, TCP- oder UDP-Port, DNS-Name, Middleware-Benennungsdienstidentifizierer} übersetzt wird.

6. Netzwerkvorrichtung nach einem der Ansprüche 1 bis 5, wobei die Adressenübersetzung gemäß der TCN-Norm erfolgt.

7. Netzwerkvorrichtung nach einem der Ansprüche 1 bis 6, wobei die Teilnetzwerke jeweils eine Ringstruktur aufweisen, die an mehrfache Verbindungsknoten anschließbar ist.

8. Netzwerkvorrichtung nach Anspruch 7, wobei die Netzwerkvorrichtung ferner mit einem Ringredundanzmechanismus versehen ist.

9. Netzwerkvorrichtung nach Anspruch 8, wobei der Ringredundanzmechanismus verwendet wird, wenn Teilnetzwerke hinzugefügt oder entfernt werden.

10. Netzwerk, umfassend eine Vielzahl von Netzwerkvorrichtungen nach Anspruch 9 und eine Endknotenvorrichtung, wobei die Endknotenvorrichtung an mindestens zwei Netzwerkvorrichtungen angeschlossen ist.

11. Transportfahrzeug mit mehreren Wagen und mindestens einer Netzwerkvorrichtung nach einem der Ansprüche 1 bis 9, wobei die Einrichtung zur Adressenübersetzung der Netzwerkvorrichtung angeordnet ist, um Adressen in Paketen zu übersetzen, die zwischen den Wagen des Fahrzeugs gesendet werden.

12. Transportfahrzeug nach Anspruch 11, wobei das Fahrzeug ein Eisenbahnfahrzeug ist.

## Revendications

1. Élément de réseau (1) pour un acheminement de paquets fiable dans un réseau hiérarchique (29) dans lequel, en cours de fonctionnement, des sous-réseaux (23) sont ajoutés et retirés, et dans lequel chaque sous-réseau reçoit un identificateur, ledit élément de réseau comprenant un équipement de traduction d'adresse agencé pour effectuer une traduction entre des adresses d'au moins deux niveaux dudit réseau hiérarchique (29) en ajoutant l'identificateur du sous-réseau local pour des communications montantes et en retirant l'identificateur du sous-réseau local pour des communications descendantes, dans lequel l'équipement de traduction d'adresse dans un sous-réseau est agencé pour se trouver aux limites du niveau hiérarchique auquel le sous-réseau est ajouté ou retiré, de sorte que l'ajout ou le retrait dudit sous-réseau (23) au/du réseau hiérarchique (29) est géré exclusivement par une reconfiguration dudit équipement de traduction d'adresse.

2. Élément de réseau selon la revendication 1, dans lequel ledit acheminement de paquets est effectué au niveau de la commutation de couche de liaison de données.

3. Élément de réseau selon la revendication 1, dans lequel ledit acheminement de paquets est effectué au niveau de l'acheminement de couche réseau.

4. Élément de réseau selon la revendication 1, dans lequel ledit acheminement de paquets est effectué à un niveau quelconque de l'organisation en couches de protocole de réseau.

5. Élément de réseau selon la revendication 1, dans lequel une adresse composée d'éléments issus du groupe {couche de liaison de données, MAC, adresse, couche réseau, IP, adresse, port TCP ou UDP, nom DNS, identificateur de service de noms de middleware} est traduite en une adresse issue du groupe {couche de liaison de données, MAC, adresse, couche réseau, IP, adresse, port TCP ou UDP, nom DNS, identificateur de service de noms de middleware}.

6. Élément de réseau selon l'une quelconque des revendications 1 à 5, dans lequel la traduction d'adresse est effectuée selon la norme TCN.

7. Élément de réseau selon l'une quelconque des revendications 1 à 6, dans lequel lesdits sous-réseaux présentent chacun une structure d'anneau pouvant se connecter à multiples noeuds de connexion.

8. Élément de réseau selon la revendication 7, dans lequel ledit élément de réseau est en outre muni d'un mécanisme de redondance en anneau.

9. Élément de réseau selon la revendication 8, dans lequel ledit mécanisme de redondance en anneau est utilisé lorsque des sous-réseaux sont ajoutés ou retirés.

10. Réseau comprenant une pluralité d'éléments de réseau selon la revendication 9 et un élément de noeud d'extrémité, ledit élément de noeud d'extrémité étant connecté à au moins deux éléments de réseau.

11. Véhicule de transport comprenant plusieurs voitures et au moins un élément de réseau selon l'une quelconque des revendications 1 à 9, dans lequel l'équipement de traduction d'adresse de l'élément de réseau est agencé pour traduire des adresses en des paquets envoyés entre les voitures du véhicule.

12. Véhicule de transport selon la revendication 11, dans lequel le véhicule est un véhicule ferroviaire.
